# EUROPEAN PATENT SPECIFICATION

(11) **EP 4 679 217 B1**
(45) Date of publication and mention of the grant of the patent: **12.08.2026**
(21) Application number: 24187880.0
(22) Date of filing: 10.07.2024
(51) Int. Cl.: G05D 1/227, G05D 1/65, G05D 1/698, G05D 105/05, G05D 107/90, G05D 105/10, G05D 109/10

(54) **METHOD FOR CONTROLLING OPERATION ON A SITE**
VERFAHREN ZUR STEUERUNG DES BETRIEBS AN EINEM STANDORT
PROCEDE DE COMMANDE D'OPERATIONS SUR UN SITE

(43) Date of publication of application: 14.01.2026
(60) Divisional application: 26189268.1
(73) Proprietor: Volvo Autonomous Solutions AB, 405 08 Göteborg (SE)
(72) Inventor: LJUNGKRANTZ, Oskar, 429 42 SÄRÖ (SE); BERGQUIST, Stefan, 417 27 GÖTEBORG (SE)
(74) Representative: Ström & Gulliksson AB

(56) References cited:
- CN-A- 116 075 796
- US-A1- 2018 182 248
- US-A1- 2020 117 201

## Description

### TECHNICAL FIELD

The disclosure relates generally to vehicles. In particular aspects, the disclosure relates to a method for controlling operation on a site. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Autonomously controlled vehicles used on a site may have different missions performing task at the site. On most sites, personnel are also present from time to time, either operating manually operating vehicles and/or inspecting the autonomously controlled vehicles. It is beneficial if the personnel is protected from the autonomously controlled vehicles in a safe but yet effective manner. Improvement of prior art systems are needed.

An example of a prior art is US2020/117201A1.

### SUMMARY

According to a first aspect of the disclosure, a computer system comprising processing circuitry being configured to be in a site operating mode for controlling the operation on a site, comprising at least one automated vehicle and a site operator, wherein the processing circuitry is configured, in a site operating mode, to: receive, from a requester, a restriction request; set the at least one automated vehicle in the restricted mode based on said restriction request, receive, from the requester, a resume request; in response to the resume request receive, from the site operator, a resume instruction; and set the at least one automated vehicle in a non-restricted mode at least based on the resume instruction. The first aspect of the disclosure may seek to provide a system that reduces the risk for personnel to be present in an area with autonomously controlled vehicles. A technical benefit may include an efficient yet safe control system where the workload on the site operator is reduced while still maintaining or increasing the safety at the site. A technical benefit may include that the site operator can for example take a lunch break without stopping all operations, by putting the site in a requester operation mode where no input from the site operator is needed. A further technical benefit may include that a manual operator, or other personnel, can leave the manual vehicle in a safe manner without being of the risk of getting run-over by one or more autonomously controlled vehicles.

Optionally in some examples, including in at least one preferred example, the processing circuitry is further configured to: receive an instruction, from the site operator, to operate in the requester operating mode or the site operating mode. A technical benefit may include an increased flexibility for the site operator. The site operator does not need to be present to restrict the operations and get it back to a non-restricted mode. Another technical benefit may be that the site system could be set in a requester mode in the morning and then not site operator is needed until closing down the site for the day. In one example, another technical benefit may be that the site operator does not need to close down the whole site if he/she needs a brake.

Optionally in some examples, including in at least one preferred example, the requester is an operator of at least one manually controlled vehicle or the site operator. A technical benefit may include an increased flexibility of the system.

Optionally in some examples, including in at least one preferred example, the restriction request comprises position data relating to a geographical area, and wherein the at least one automated vehicle is set in the restricted mode in said geographical area. A technical benefit may include an increased flexibility of the system.

Optionally in some examples, including in at least one preferred example, the resume request comprises position data relating to a geographical area, and wherein the at least one automated vehicle is set in the non-restricted mode in said geographical area. A technical benefit may include an increased flexibility of the system.

Optionally in some examples, including in at least one preferred example, the site comprises at least one manually controlled vehicle, and wherein the processing circuitry is further configured in the site operating mode to: set the at least one manually controlled vehicle in a restricted mode based on said restriction request; and set the at least one manually controlled vehicle in a non-restricted mode based on the resume instruction. A technical benefit may include an increased safety of the site.

Optionally in some examples, including in at least one preferred example, the processing circuitry is further configured in the site operating mode to: receive, from a first requester, a first restriction request; set the at least one automated vehicle in the restricted mode based on said first restriction request, receive, from a second requester, a second restriction request; set the at least one automated vehicle in the restricted mode based on said second restriction request, receive, from the first requester a, a first resume request; receive, from the second requester, a second resume request; in response to the second resume request receive, from the site operator, a resume instruction; and set the at least one automated vehicle in a non-restricted mode at least based on the second resume instruction.

Optionally in some examples, including in at least one preferred example, the processing circuitry is further configured in the site operating mode to: receive, from a first requester, a first restriction request; set the at least one automated vehicle in the restricted mode based on said first restriction request, receive, from a second requester, a second restriction request; set the at least one automated vehicle in the restricted mode based on said second restriction request, receive, from the first requester a, a first resume request; receive, from the second requester, a second resume request; in response to the second resume request receive, from the site operator, a resume instruction; and set the at least one automated vehicle in a non-restricted mode at least based on the first and second resume instruction.

Optionally in some examples, including in at least one preferred example, the processing circuitry is further configured in the requester operating mode to: receive, from a first requester, a first restriction request; set the at least one automated vehicle in the restricted mode based on said first restriction request, receive, from a second requester, a second restriction request; set the at least one automated vehicle in the restricted mode based on said second restriction request, receive, from the first requester a, a first resume request; receive, from the second requester, a second resume request; and set the at least one automated vehicle in a non-restricted mode at least based on the first and second resume request.

Optionally in some examples, including in at least one preferred example, the processing circuitry is further configured in the requester operating mode to: receive, from a first requester, a first restriction request; set the at least one automated vehicle in the restricted mode based on said first restriction request, receive, from a second requester, a second restriction request; set the at least one automated vehicle in the restricted mode based on said second restriction request, receive, from the first requester a, a first resume request; receive, from the second requester, a second resume request; and set the at least one automated vehicle in a non-restricted mode at least based on the second resume request.

Optionally in some examples, including in at least one preferred example, in the restricted mode; the operation of the vehicle; comprises at least one of reducing the speed of the vehicle, activating safety functions of the vehicle, stopping the operations of the vehicle.

Optionally in some examples, including in at least one preferred example, the site comprises a plurality of automated vehicles and wherein the processing circuitry is further configured to set all automated vehicle within an area of the site in a restricted mode, based on the restriction request.

According to a second aspect of the disclosure, a site comprising the computer system of the first aspect, wherein the site further comprises at least one automated vehicle and at least one site operator.

According to a third aspect of the disclosure, a computer-implemented method for controlling the operation on a site in a site operating mode, wherein the site comprises at least one automated vehicle and a site operator; wherein the method comprises, for the site operating mode: receive, by the processing circuitry, a restriction request from a requester; set, by the processing circuitry, the at least one automated vehicle in the restricted mode based on said restriction request, receive, by the processing circuitry, a resume request from the requester; in response to the resume request, receive, by the processing circuitry, a resume instruction from a site operator, and set, by the processing circuitry, the at least one automated vehicle in a non-restricted mode based on the resume instruction.

Optionally in some examples, including in at least one preferred example, further comprising, for a requester operating mode: receive, by the processing circuitry, a restriction request from a requester; set, by the processing circuitry, the at least one automated vehicle in the restricted mode based on said restriction request, receive, by the processing circuitry, a resume request from the requester; set, by the processing circuitry, the at least one automated vehicle in a non-restricted mode based on the resume request.

According to a fourth aspect of the disclosure, a computer program product comprising program code for performing, when executed by the processing circuitry, the method of the third aspect.

According to a fifth aspect of the disclosure, a non-transitory computer-readable storage medium comprising instructions, which when executed by the processing circuitry, cause the processing circuitry to perform the method of the third aspect.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIGS. 1A-C** are exemplary views of a site according to examples.
**FIG. 2** is an exemplary setup of a site according to an example.
**FIG. 3** is an exemplary system diagram of functionality of a computer system according to one example.
**FIGS. 4A-C** are exemplary system diagrams of functionality of a computer system being in a requester operating mode according to examples.
**FIGS. 5A-C** are exemplary system diagrams of functionality of a computer system being in a site operating mode according to examples.
**FIGS. 6A-B** are flow charts of exemplary methods according to examples.
**FIGS. 7A-B** are flow charts of exemplary methods according to examples.
**FIG. 8** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

In prior art solutions, if an operator needs to exit the area or the vehicle he/she needs to manually contact a site operator and ask that person to set the site in a safe state, which generally means that the activity is paused until the operator is back in a safe situation. The vehicle operator then manually contacts the site operator again, and the operator approves the resuming of operations. A similar situation arises when a person is entering an autonomous site.

The inventors of the present invention have insightfully realized that the safety at a site could be increased by at the same time reducing the workload on the site operator. In the present invention, each operator of a manually controlled vehicle can pause the operation at the site by not allowing operation, whereby the system puts the automated vehicles at the site, or part of a site, in a restricted mode. Depending on if the system is set in a first operating mode (requester operation mode) or a second operating mode (site operating mode), the automated vehicles are maintained in the restricted mode until a resume instruction and/or resume request to resume operation is received from either the requester or from both the requester and the site operator. The site operator can now for example take a lunch break without stopping all operations, by putting the site in a requester operation mode where no input from the site operator is needed.

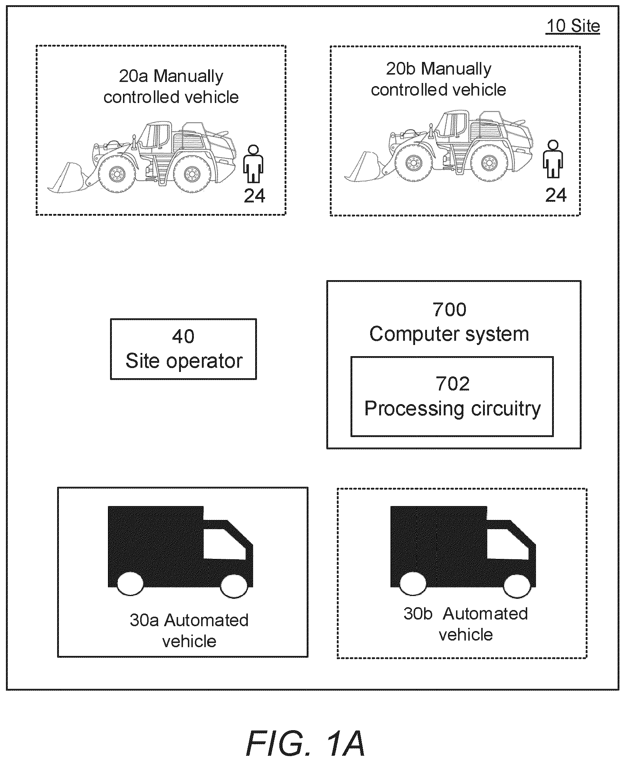

**FIGS. 1A-C** are exemplary illustration of a site **10** according to examples. The site **10** is preferably an area where a plurality of vehicles **20, 30** are operated. The site **10** may for example be a worksite, a machine hall, warehouse or distribution center.

The site may be a partly autonomous site, where manual vehicles are present in certain restricted areas of the site **10.** As a non-limiting example, such areas may be loading/off-loading areas where workers/operator(s) at least partly handles work related to loading and/or off-loading load of vehicles.

In the example of **FIG. 1A****,** the site **10** is arranged with at least one manual vehicle **20a, 20b** and at least one automatic vehicle **30a, 30b.** The vehicles may also be referred to as machines. The vehicles **20, 30** may be heavy machinery such as excavators, wheel loaders, hydraulic excavators, articulated haulers, haul truck, motor graders, soil and asphalt compactors, pavers, backhoe loaders, skid steers, milling machine, bulldozers, cranes and forklifts to mention a few.

The automatic vehicle **30** may for example be automated guided vehicles (AGVs) or autonomous mobile robots (ARMs). The manually controlled vehicles are at least in part manually controlled by an operator. The operator is a human worker at the site **10.** The operator may also be referred to as a driver or a worker.

The site **10** further comprises a site operator **40.** The site operator **40** may be a single user of the site or a group of users. The site operator **40** is responsible for the overall control of the vehicles and operators at the site **10** or parts of the site **10.** The site operator **40** may be responsible for the vehicle operation, by ensuring that the vehicles are operated safely and according to the site's requirements. The site operator **40** may further be responsible for the overall site safety. The operator **40** may for example ensure that all operators are in compliance with safety regulations. The operator **40** may further be responsible for coordinating the operators and workers to ensure that the vehicles are used efficiently and effectively.

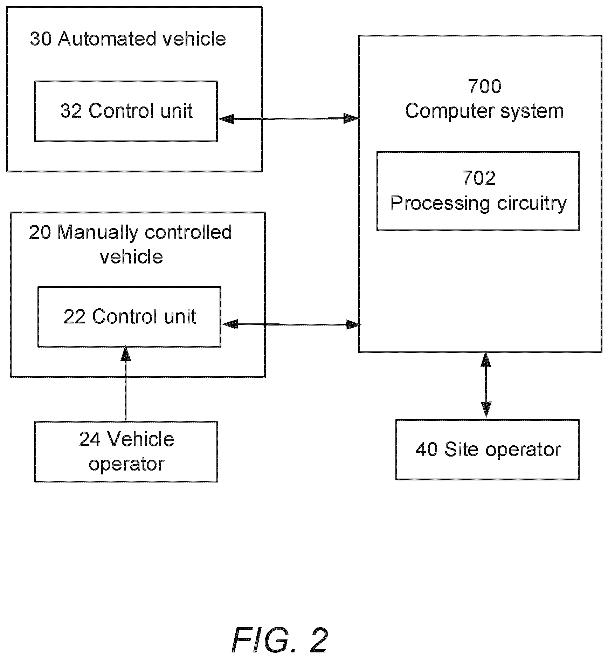

The site **10** is in operative communication with a computer system **700** comprising a processing circuitry **702.** The computer system **700** is configured to control the operation of a site **10** and will be described more in detail with reference to **FIGS. 2** - **8****.**

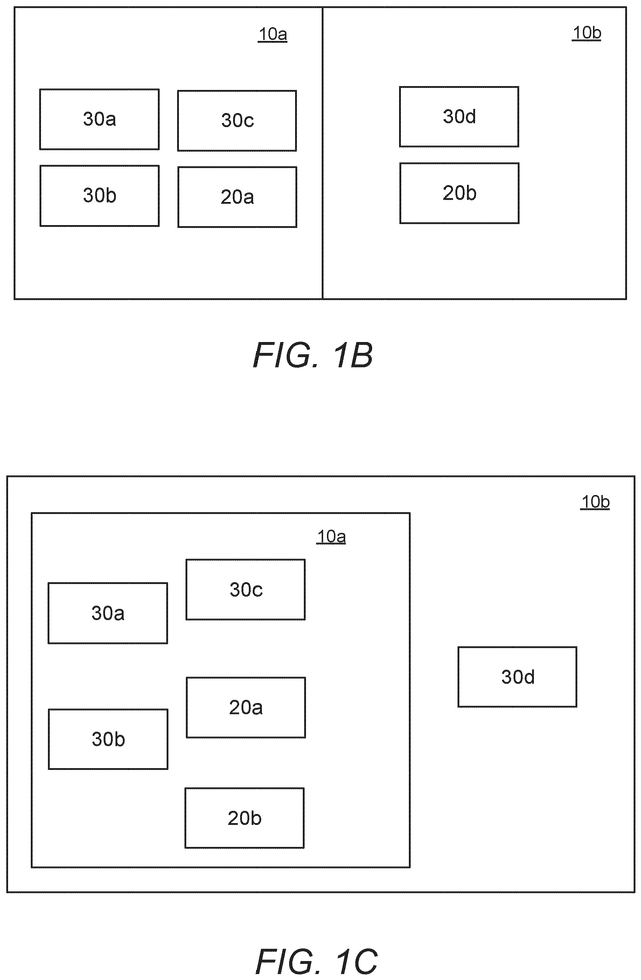

Turning to **FIGS. 1B-C,** the site **10** is divided into a plurality of sections or areas **10a, 10b.** In one example, the size of the sections **10a, 10b** are be fixed. In one example, the size of the sections **10a, 10b** are adaptable. In one example, the number of sections are fixed. In one example, the number of sections are adaptable.

In one example, shown in **FIG. 1B****,** the site **10** comprises five automated vehicles **30a-e** and one manually controlled vehicle **20a.** The site **10** comprises a first area **10a** and a second area **10b.** Three automated vehicles **30a-c** and one manually controlled vehicle **20a** is arranged in the first area **10a,** and two automated vehicles **30d-e** are arranged in the second area **10b.** In this example, the size and number of sections are fixed.

In one example, as shown in **FIG. 1C****,** the site **10** comprises four automated vehicles **30a-d** and two manually controlled vehicles **20a-b.** The site **10** comprises a first area **10a** and a second area **10b.** Three automated vehicles **30a-c** and two manually controlled vehicles **20a-b** is arranged in the first area **10a,** and one automated vehicle **30d** is arranged in the second area **10b.** In this example, the size and number of sections are adaptable.

In one example the site **10** comprises a plurality of areas **10a, 10b.** This may be seen as having a plurality of geographical zones. The geographical zones may be determined by position data. The position data may be received from one of the vehicles 20, **30.**

**FIG. 2** illustrates an example of the functionality of a computer system **700** having a processing circuitry **702** and an associated setup on a site **10.** The site **10** comprises at least one automated vehicle **30** and at least one manually controlled vehicle **20.** The automated vehicle **30** comprises a control unit **32.** The manually controlled vehicle comprises a control unit **22.** A vehicle operator **24** of the manually controlled vehicle **20** is configured to provide instructions to the control unit **22** of the vehicle **20.** The control units **22, 32** of the vehicles **20, 30** are configured to communicate with the processing circuitry **702** of the computer system **700.** In one example, the control units **22, 32** of the vehicles **20, 30** are configured to communicate with the computer system **700.** The site operator **40** may be configured to provide instructions to the computer system **700.**

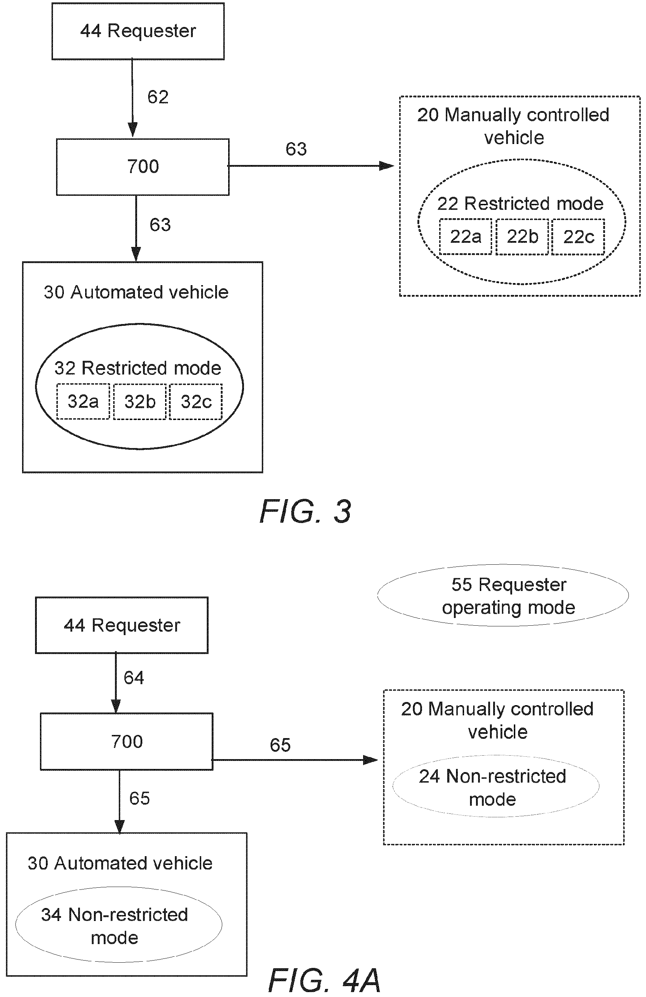

**FIG. 3** illustrates the functionality of the computer system **700** once someone at the site **10** wants to put the vehicles of the site **10,** or parts of the site **10,** in a restricted mode **22, 32.** That someone may be a vehicle operator **24** or the site operator **40.** The person or persons that request that at least a part of the site **10** is to be put in a restricted mode **22, 32** is referred to as a requester **44.** In other words, the requester **44** may be a vehicle operator of at least one manually controlled vehicle, or the site operator **40.**

In one example, in the restricted mode **22, 32,** the speed of the vehicle is reduced **22a, 32a** (including a full stop), safety functions are activated **22b, 32b,** and/or the operations of the vehicles are restricted **22c, 32c.** The vehicle **20, 30** may be reduced to a low speed or reduced to be standing still. Safety functions may relate to sending out alarm sounds, activating alarm lamps, reducing speed, reducing possible operations and so on. Restricting vehicle operations may include stopping or restricting the speed, as well as stopping or restricting other functions of the vehicles, such as lifting functions etc..

Once the requester **44** has requested that at least all automatic vehicles **30** of at least a part of the site **10** is to be put in a restricted mode **22, 32,** a restriction request **62** is transmitted. The restriction request **62** is transmitted to computer system **700.** The computer system **700** is configured to put the automated vehicle(s) **30** in a restricted mode **32** based on the restriction request **62.** This is preferably made by transmitting a restriction instruction **63** to the vehicle(s). If the site further comprises a manually controlled vehicle, the computer system **700** may in some examples further be configured to put the manually controlled vehicle **20** in a restricted mode **22.**

In one example, the requester **44** transmits a restriction request by manual input. If the requester is a vehicle operator **24,** the manual input may be made on an input device in the vehicle the operator is operating. If the requester is a site operator **40,** the manual input may be made on an input device on the site **10.**

In one example, all at least all automated vehicles **20** of the site **10** are put in the restricted mode **22, 32** once a restriction request is transmitted to the computer system **700.**

In one example, the restriction request **62** comprises positon data of the requester **44.** The position data may relate to information of the geographical position of the requester **44.** The geographical position may be x-y-coordinates. The geographical position may be retrieved from a positioning device. The positioning device may comprise Global positioning system (GPS), a light detection and ranging system (LiDAR), inertial navigation system (INS), real-Time Kinematics GPS, global navigation satellite system (GNSS), computer vision and/or ultra-Wideband (UWB). In one example, the positioning device is arranged on a vehicle of the requester (in the examples where the requester is a vehicle operator **24).** In one example, the positioning device is arranged on a vehicle which is in operative communication with the site operator **40** (in the examples where the requester is the site operator **40).**

In one example, the site **10** has a setup as described in relation to the example of **FIG. 1B****.** In this example, the restriction request **62** comprises the geographical position of the requester **44.** In this example, the requester **44** is the vehicle operator **25** of the first manually controlled vehicle **20a** that is arranged in the first area **10a** of the site **10.** Once a restriction request **62** is transmitted to the computer system **700,** the computer system **700** is configured to put at least all automated vehicle(s) in the first area **10a** in a restricted mode **22, 32.** In this example, the fourth automated vehicle **30d** (and the second manually controlled vehicle **20b)** are not put in a restricted mode, as they are arranged in a second area **10b** of the site **10.**

In one example, the site **10** has a setup as described in relation to the example of **FIG. 1C****.** In this example, the restriction request **62** comprises the geographical position of the requester **44.** Once a restriction request **62** is transmitted to the computer system **700,** the computer system **700** is configured to put at least all automated vehicle(s) within a predetermined distance from the requester **44** in a restricted mode **22, 32.** In this example, the requester **44** is the vehicle operator **25** of the first manually controlled vehicle **20a.** The computer system **700** is thus configured to put at least all automated vehicles within a predetermined distance from the first manually controlled vehicle **20a** in a restricted mode **22, 32.** This area can be seen as a first area **10a** of the site **10,** where the area is adaptable. In this example, the fourth automated vehicle **30d** is not put in a restricted mode, as it is far away from the requester **44.** The fifth automated vehicle **30d** can be seen as being in a second area **10b** of the site **10,** where the area is adaptable.

In one example, the computer system **700** is configured to determine position data of the requester **44** based on the restriction request **62** and set at least one automated vehicle **30** in the restricted mode **32** based on the position data. In one example, the computer system **700** is configured to determine position data of the requester **44** based on the restriction request **62** and set at least one manually controlled vehicle **20** in the restricted mode **22** based on the position data. In one example, the processing circuitry **700** of the computer system **700** is further configured to determine position data of the requester **44** based on the resume request **62,** and use the position data when setting the vehicles **20, 30** in the non-restricted mode **24, 34(as** soon will be described more in detail).

The computer system **700** may be configured in different operating modes, where the different operating modes control how to put the vehicles **20, 30** in a non-restricted mode after being in the restricted mode **22, 32.** The site may be arranged in a requester operating mode **55** and/or a site operating mode. In one example, the site operator **40** transmits instructions to the computer system **700** on which operating mode the site **10** should be operated in. In one example, the site operator **40** determines that the site **10** should be operated in a site operating mode during "normal operations", for example when the site operator **40** is present at the site and controls the operation. In one example, the site operator **40** determines that the site **10** should be operated in a requester operating mode 55 when the site operator **40** is not present at the site. This may be temporarily, such as for a bathroom break or lunch break, or for a longer time period such as at specific time intervals such as during the night or weekends.

In one example, the computer system **700** is configured to determine if the site **10,** or parts of the site **10,** should be driven in a requester operating mode or a site operating mode. The computer system **700** may determine which operating mode that is to be activated based on time information. For example, the site operating mode may be used during normal working hours whereas the requester operating mode is to be used during other times where vehicles are operating at the site **10.**

The computer system **700** may be configured to be arranged in a requester operating mode **55.** Two examples of the requester operating mode **55** are illustrated in **FIGS. 4A-C.**

As illustrated in the example of **FIG. 4A****,** in the requester operating mode **55,** the computer system **700** is configured to receive a resume request **64.** The resume request **64** is transmitted from the requester **44** that was previously transmitting the restriction request **62.** The requester **44** is thus requesting the computer system **700** to resume operation by reseting the restriction request previously sent. This is typically the case if the requester **700,** for example being a vehicle operator **25,** is back in its vehicle again and want to resume work.

In one example, once the resume request **64** is received by the computer system **700,** the at least one automated vehicle **30** is put in a non-restricted mode **34, 24.** In one example, all vehicles **20, 30** of the site **10** are put in a non-restricted mode **34, 24.** In one example, all vehicles that are in a restricted mode **23, 32** are put in a non-restricted mode **34, 24.** In one example, all vehicles that are in a restricted mode **23, 32** within a predetermined area are put in a non-restricted mode **34, 24.** In one example, all vehicles that are in a restricted mode **23, 32** within a predetermined distance from the requester **44** are put in a non-restricted mode **34, 24.** In one example, only all automated vehicles are put in a non-restricted mode. As should be understood, the example above can be combined.

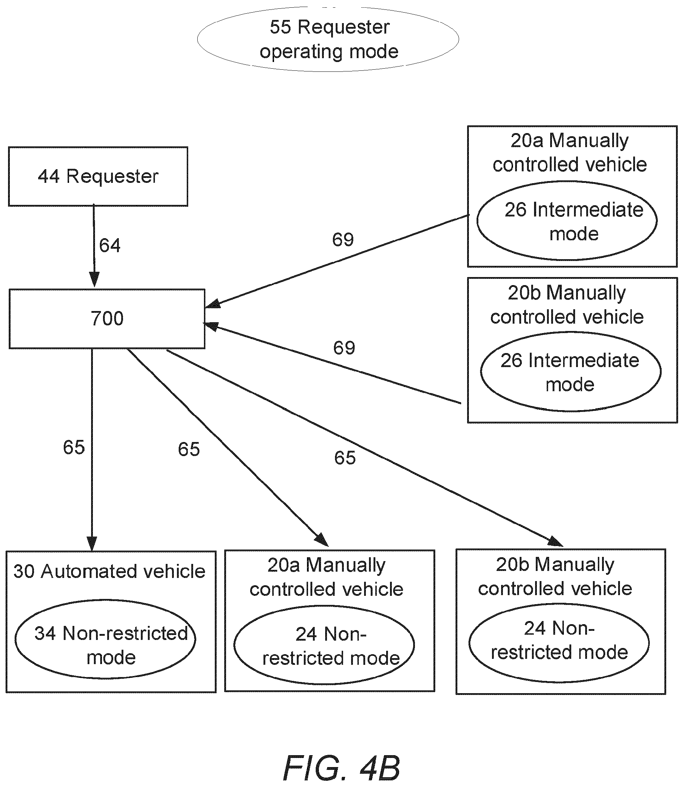

In one example, as illustrated in **FIG. 4B****,** the computer system **700** is configured to obtain information **69** if the manually controlled vehicle(s) **20** at a site **10** are in an intermediate mode. In on example, this information **69** is obtained once a resume request **64** is received. In one example, this information **69** is obtained at a predetermined time interval. If all manually controlled vehicle(s) **20** at a site **10,** or part of a site **10,** are in an intermediate mode, the computer system **700** transmits an instruction **65** to put the vehicles in a non-restricted mode **34, 24.** In one example, the manually controlled vehicles **20** are configured to transmit signals with the mode information **69** as a heart-beat signal. In other words, the signal with mode information **69** may be transmitted with a predetermined time interval. The time interval may be very short.

In one example, as illustrated in **FIG. 4B****,** the site **10** comprises at least one automated vehicle **30,** at least a first manually controlled vehicle **20a** and at least a second manually controlled vehicle **20b,** and the computer system **700** is configured to be arranged in a requester operating mode **55.** The computer system **700** is configured to receive state information **69** from the first manually controlled vehicle **20a** and state information **69** from the second manually controlled vehicle **20b.** The computer system **700** is configured to set the vehicles **30, 20a, 20b** in the non-restricted mode **24, 34** once a resume request is received and when all manually controlled vehicles **20a, 20b** are in an intermediate mode. If one of the manually controlled vehicles **20a** are not in an intermediate mode, the vehicle(s) will not be set in a non-restricted mode **34.**

In one example, a manually controlled vehicles **20a** is in an intermediate mode if no restriction request has been transmitted by the operator **25** of the vehicle. In one example, a manually controlled vehicles **20a** is in an intermediate mode if the vehicle is not in a restricted mode **22.**

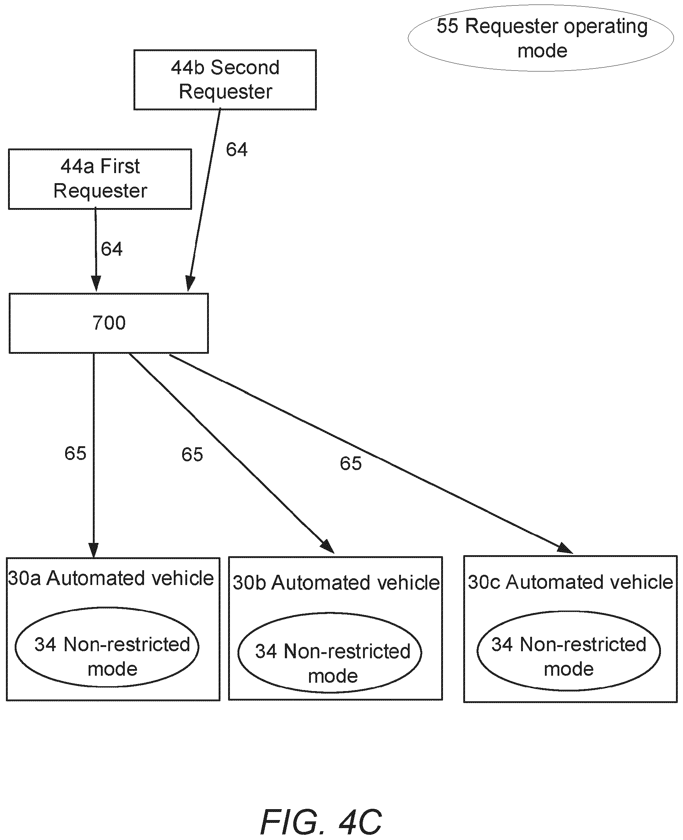

Turning to **FIG 4C****,** a further example is shown. In the requester operating mode the computer system **700** is configured to receive a restriction request **62** to set the at least one automated vehicle **30** in the restricted mode **32.** The system **700** further receives a restriction request **62** from a second requester **44b** to set the at least one automated vehicle **30** in the restricted mode 32. The first requester **44a** may for example be the operator of a first manual vehicle **20a** and the second requester **44b** may for example be the operator of a second manual vehicle **20a.** In one example, the first requester **44a** is an operator of a manual vehicle **20a** and the second requester **44b** is another worker at the site. In this example the computer system **700** is in a requester operator mode **55.** The computer system **700** is further configured to receive, from the first requester **44a,** a resume request **64.** If the second requester **44b** have not yet made a resume request, the automated vehicle will not be put in a non-restricted mode. The computer system **700** is further configured to receive, from the second requester **44b,** a resume request **64.** Hence, now both requester has made a resume request. The computer system **700** is configured to, in response to the second resume request **64** set the at least one automated vehicle **30** in a non-restricted mode **34** at least based on the second resume instruction **68.**

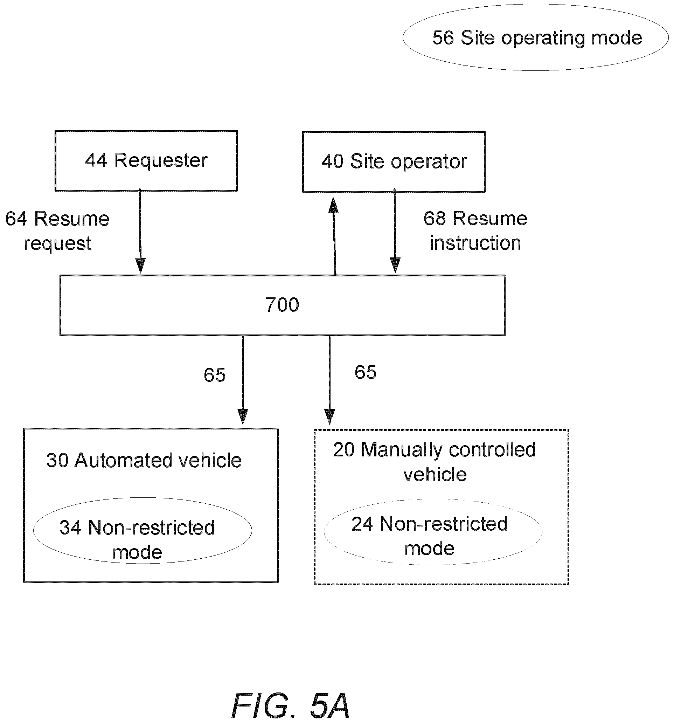

The computer system **700** is configured to be arranged in a site operating mode **56.** Examples of the operation in a site operating mode is shown in**FIGS. 5A-C.** As is shown in **FIG. 5A****,** in the site operating mode **56,** the computer system is configured to receive a resume request **64.** The resume request **64** is transmitted from the requester **44** that was previously transmitting the restriction request **62.** The requester **44** is thus requesting the computer system **700** to resume operation, and thus reset the restriction request previously sent.

In the site operating mode **56,** a resume request **44** from the requester is not sufficient to set the vehicles in a non-restricted mode. In this operating mode, the site operator **40** also needs to determine that the work is safe to be resumed and re-activated.

In one example, the computer system **700** receives the resume request **64** from the requester **44** and based on said request prompts the site operator **40** to transmit a resume instruction **68.** The site operator **40** may transmit a resume instruction **68** by an input device arranged at the site **10.** Once the computer system **700** receives the resume instruction **68,** the computer system **700** instructs the vehicle(s) **20, 30** to be put in a non-restricted mode **24, 34.**

In one example, a requester **44** sends a resume request **64** wishing to proceed operation. The resume request **64** is obtained by the computer system **700.** The computer system **700** prompts the site operator **40** to send out a resume instruction **68** to the computer system **700.** Once the computer system **700** receives the resume instruction **68,** the computer system is configured to transmit instructions **65** to put the vehicles **20, 30** in a non-restricted mode **24, 34.**

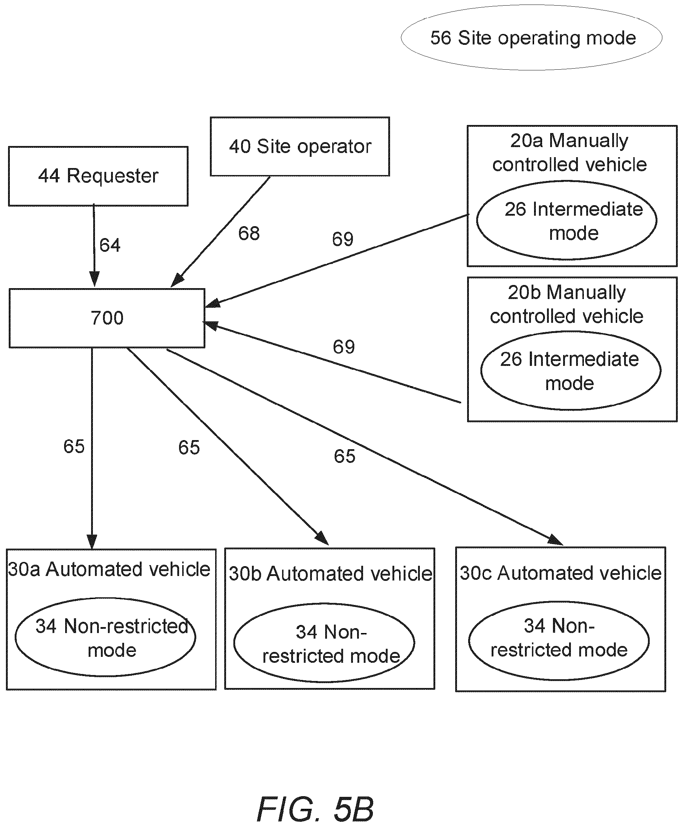

In one example of **FIG. 5B****,** the computer system **700** is further configured to receive state information **69** from the manually controlled vehicle(s). The computer system **700** is configured to obtain information **69** if the manually controlled vehicle(s) **20** at a site **10** are in an intermediate mode. In on example, this information **69** is obtained once a resume request **64** is received. In on example, this information **69** is obtained once a resume instruction **68** is received from the site operator **40.** In one example, this information **69** is obtained at a predetermined time interval.

If all manually controlled vehicle(s) **20** at a site **10,** or part of a site **10,** are in an intermediate mode, the computer system **700** transmits an instruction **65** to put at least the automated vehicles in a non-restricted mode **34.** In one example, the manually controlled vehicles **20** are configured to transmit signals with the mode information **69** as a heart-beat signal. In other words, the signal with mode information **69** may be transmitted with a predetermined time interval. The time interval may be very short.

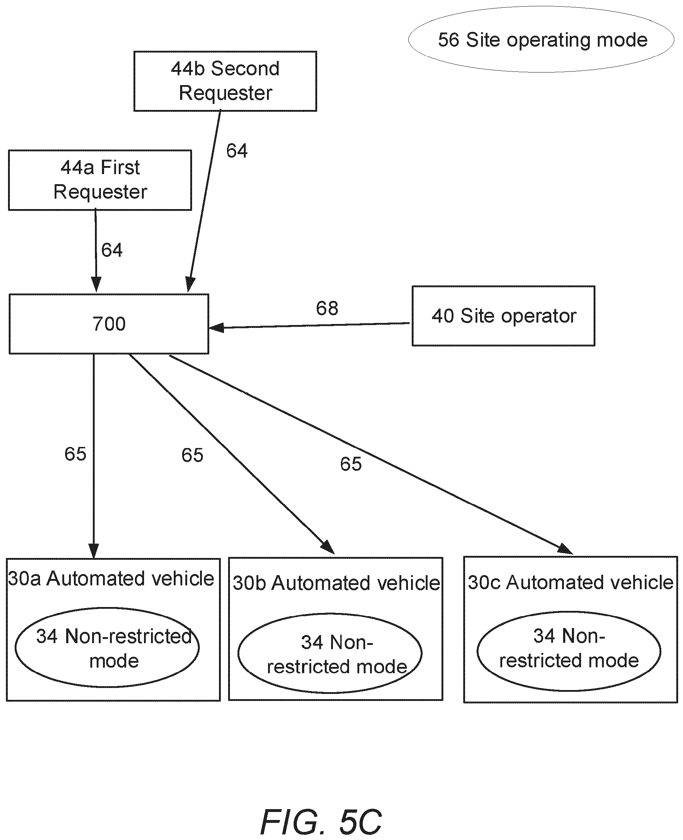

Turning to **FIG. 5C****,** a further example is shown. In the site operating mode the computer system **700** is configured to receive a restriction request **62** to set the at least one automated vehicle **30** in the restricted mode **32.** The system **700** further receives a restriction request **62** from a second requester **44b** to set the at least one automated vehicle **30** in the restricted mode 32. The first requester **44a** may for example be the operator of a first manual vehicle **20a** and the second requester **44b** may for example be the operator of a second manual vehicle **20a.** In one example, the first requester **44a** is an operator of a manual vehicle **20a** and the second requester **44b** is another worker at the site.

The computer system **700** is further configured to receive, from the first requester **44a,** a resume request **64.** If the second requester **44b** have not yet made a resume request, the automated vehicle will not be put in a non-restricted mode.

The computer system **700** is further configured to receive, from the second requester **44b,** a resume request **64.** Hence, now both requester has made a resume request. The computer system **700** is configured to, in response to the second resume request **64** receive, from the site operator **40,** a resume instruction **68,** and set the at least one automated vehicle **30** in a non-restricted mode **34** at least based on the second resume instruction **68.**

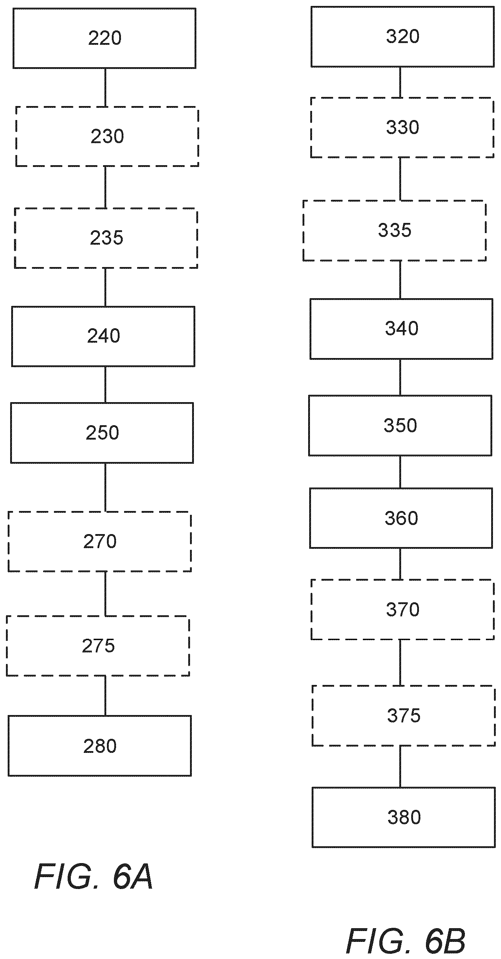

Schematic illustrations of examples of methods for controlling the operation on a site **10** is provided in 3**FIGS. 6A-B.**

The method of **FIG. 6A** illustrates an example of the system being in a requester operating mode. The method comprises receiving **220,** from a requester **44,** a restriction request **62.** In one example, the method may further comprises determining **230** position data retrieved from the restriction request. In one example, the method may further comprise determining **235** a first area **10a** of the site. The method further comprises setting **240** the at least one automated vehicle **30** in a restricted mode **32** based on said restriction request **62.**

The method further comprises receiving **250,** from the requester **44,** a resume request **64.** The computer system **700** is setting the vehicle **30** in a non-restricted mode **34** by transmitting an instruction to said vehicle based at least on the resume request. Hence, the method further comprises setting **280** the vehicle(s) in a non-restricted mode.

In one example, the method further comprises, before setting **280** the vehicle(s) in a non-restricted mode, receiving **270** state information **69** from the manually controlled vehicle(s) **20** at the site, or at a relevant part of the site **10.** The method determines **275** whether all manually controlled vehicle(s) **20** at the site, or at a relevant part of the site **10** are in are in an intermediate mode based on the state information **69.** Upon determining **275** that all manually controlled vehicle(s) **20** at the site, or at a relevant part of the site **10** are in are in an intermediate mode, the method further comprises setting **280** at least one automated vehicle **30** in a non-restricted mode **34.** The instruction may be sent based on the resume request **64** in combination with the determination that all relevant manually controlled vehicle(s) **20** are in an intermediate mode.

A method of controlling a plurality of vehicles in a requester operating mode will now be described with relation to the example of the site in **FIG. 1B****.** In this example, the requester **44** is the vehicle operator **25** of the first manually controlled vehicle **20a** that is arranged in the first area **10a** of the site **10.** The method comprises receiving **220** a restriction request **62** from the requester **44.** The method further comprises determining **230** position data retrieved from the restriction request. The method further comprises setting **240** the three automated vehicles **30a-c** and, optionally the one manually controlled vehicle **20a,** that is arranged in the first area **10a,** in a restricted mode **32** based on said restriction request 62. In this example, only the vehicles arranged in the first area **10a** are put in restricted mode. The method further comprises receiving **250,** from the requester **44,** a resume request **64.** In one example, the method further comprises receiving **270** state information **69** from the one manually controlled vehicle **20a** in the area **10a.** The computer system **700** determines **275** whether all (in this example, only one) manually controlled vehicle(s) **20** at the area **10a** of the site is in are in an intermediate mode based on the state information **69.** Upon determining the manually controlled vehicle is in an intermediate mode, the method further comprises setting **280** the three automated vehicles **30a-c** and the manually controlled vehicle **20a** in a non-restricted mode **24, 34.** The computer system **700** is setting the vehicles **20, 30** in a non-restricted mode **34** by transmitting instructions to all relevant vehicles.

A method of controlling a plurality of vehicles in a requester operating mode will now be described with relation to the example of the site in **FIG. 1C****.** In this example, the requester **44** is the vehicle operator **25** of the first manually controlled vehicle **20a** that is arranged in the first area **10a** of the site **10.** The method comprises receiving **220** a restriction request **62** from the requester **44.** The method further comprises determining **230** position data retrieved from the restriction request. The method may further comprise determining **235** a first area **10a** of the site. The determination is preferably based on the position data from the restriction request.

The method further comprises setting **240** the three automated vehicles **30a-c,** and optionally the two manually controlled vehicles **20a, 20b,** that is arranged in the first area **10a,** in a restricted mode **32** based on said restriction request **62.** In this example, only the vehicles arranged in the first area **10a** are put in restricted mode. The method further comprises receiving **250,** from the requester **44,** a resume request **64.** In one example, the method further comprises receiving **270** state information **69** from all manually controlled vehicles **20a, 20b** in the area **10a.** The computer system **700** determines **275** whether all (in this example, both) manually controlled vehicles **20a, 20b** at the area **10a** of the site is in are in an intermediate mode based on the state information **69.** Upon determining that both the manually controlled vehicles are in an intermediate mode, the method further comprises setting **280** the three automated vehicles **30a-c** and the two manually controlled vehicles **20a, 20b** in a non-restricted mode **24, 34.**

The method of **FIG. 6B** illustrates an example of the system being in a site operating mode **56.** The method comprises receiving **320,** from a requester **44,** a restriction request **62.** In one example, the method further comprises determining **330** position data retrieved from the restriction request. The method may further comprise determining **330a** a first area **10a** of the site. The method further comprises setting **340** the at least one automated vehicle **30** in a restricted mode **32** based on said restriction request **62.**

The method further comprises receiving **350** a resume request **64** from the requester **44.** The method further comprises receiving **360** a resume instruction **68** from a site operator **40.** The resume instruction **68** is preferably received in response to the resume request **64.** The method further comprises setting **380** the at least one automated vehicle **30** in a non-restricted mode **34** based at least one the resume instruction **68.**

In one example, the method further comprises, before setting **380** the vehicle(s) in a non-restricted mode, receiving **370** state information **69** from the manually controlled vehicle(s) **20** at the site, or at a relevant part of the site **10.** The method determines **375** whether all manually controlled vehicle(s) **20** at the site, or at a relevant part of the site **10** are in are in an intermediate mode based on the state information **69.** Upon determining **375** that all manually controlled vehicle(s) **20** at the site, or at a relevant part of the site **10** are in are in an intermediate mode, the method further comprises setting **380** at least one automated vehicle **30** in a non-restricted mode **34.** It should be noted that the step of receiving state information **69** may be performed before receiving a resume instruction **68** from the site operator **40.**

A method of controlling a plurality of vehicles in a site operating mode will now be described with relation to the example of the site in **FIG. 1B****.** In this example, the requester **44** is the vehicle operator **25** of the first manually controlled vehicle **20a** that is arranged in the first area **10a** of the site **10.** The method comprises receiving **320** a restriction request **62** from the requester **44.** The method further comprises determining **330** position data retrieved from the restriction request. The method further comprises setting **340** the three automated vehicles **30a-c** and the one manually controlled vehicle **20a** that is arranged in the first area **10a,** in a restricted mode **32** based on said restriction request **62.** In this example, only the vehicles arranged in the first area **10a** are put in restricted mode. The method further comprises receiving **250,** from the requester **44,** a resume request **64.** The method further comprises receiving **360** a resume instruction **68** from the site operator **40.**

In one example, the method further comprises receiving **370** state information **69** from the one manually controlled vehicle **20a** in the area **10a.** The computer system **700** determines **370a** whether all (in this example, only one) manually controlled vehicle(s) **20** at the area **10a** of the site is in are in an intermediate mode based on the state information **69.** Upon determining the manually controlled vehicle is in an intermediate mode, the method further comprises setting **380** the three automated vehicles **30a-c** and the manually controlled vehicle **20a** in a non-restricted mode **24, 34.** The computer system **700** is setting the vehicles **20, 30** in a non-restricted mode **34** by transmitting instructions to all relevant vehicles.

A method of controlling a plurality of vehicles in a site operating mode will now be described with relation to the example of the site in **FIG. 1C****.** In this example, the requester **44** is the vehicle operator **25** of the first manually controlled vehicle **20a** that is arranged in the first area **10a** of the site **10.** The method comprises receiving **320** a restriction request **62** from the requester **44.** The method further comprises determining **330** position data retrieved from the restriction request. The method may further comprise determining **330a** a first area **10a** of the site. The determination is preferably based on the position data from the restriction request.

The method further comprises setting **340** the three automated vehicles **30a-c** and the two manually controlled vehicles **20a, 20b** that is arranged in the first area **10a,** in a restricted mode **32** based on said restriction request **62.** In this example, only the vehicles arranged in the first area **10a** are put in restricted mode. The method further comprises receiving **250,** from the requester **44,** a resume request **64.** The method further comprises receiving **360** a resume instruction **68** from the site operator **40.** In one example, the method further comprises receiving **370** state information **69** from all manually controlled vehicles **20a, 20b** in the area **10a.** The computer system **700** determines **370a** whether all (in this example, both) manually controlled vehicles **20a, 20b** at the area **10a** of the site is in are in an intermediate mode based on the state information **69.** Upon determining that both the manually controlled vehicles are in an intermediate mode, the method further comprises setting **380** the three automated vehicles **30a-c** and the two manually controlled vehicles **20a, 20b** in a non-restricted mode **24, 34.**

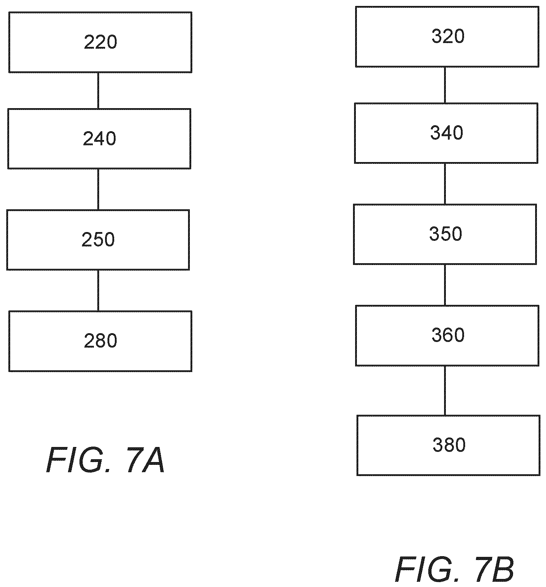

Schematic illustrations of methods for controlling the operation on a site **10** is provided in **FIGS. 7A-B.** The method of **FIG. 7A** illustrates an example of the system being in a requester operating mode. The method comprises receiving **220,** from a requester **44,** a restriction request **62** and setting **240** the at least one automated vehicle **30** in a restricted mode **32** based on said restriction request **62.** The method further comprises receiving **250,** from the requester **44,** a resume request **64** and setting **280** the at least one automated vehicle **30** in a non-restricted mode **34** based on said resume request **64.**

The method of **FIG. 7B** illustrates an example of the system being in a site operating mode. The method comprises receiving **320,** by the processing circuitry, a restriction request **62** from a requester **44** and setting **340** by the processing circuitry, the at least one automated vehicle **30** in the restricted mode **32** based on said restriction request **62.** The method further comprises receiving **350,** by the processing circuitry, a resume request **64** from the requester **44.** The method further comprises receiving **370,** by the processing circuitry, a resume instruction **68** from a site operator **40.** The resume instruction **68** is preferably receiving as a response to receiving the resume request **64.** The method further comprises setting **380,** by the processing circuitry, the at least one automated vehicle **30** in a non-restricted mode **34** based on the resume instruction **68.**

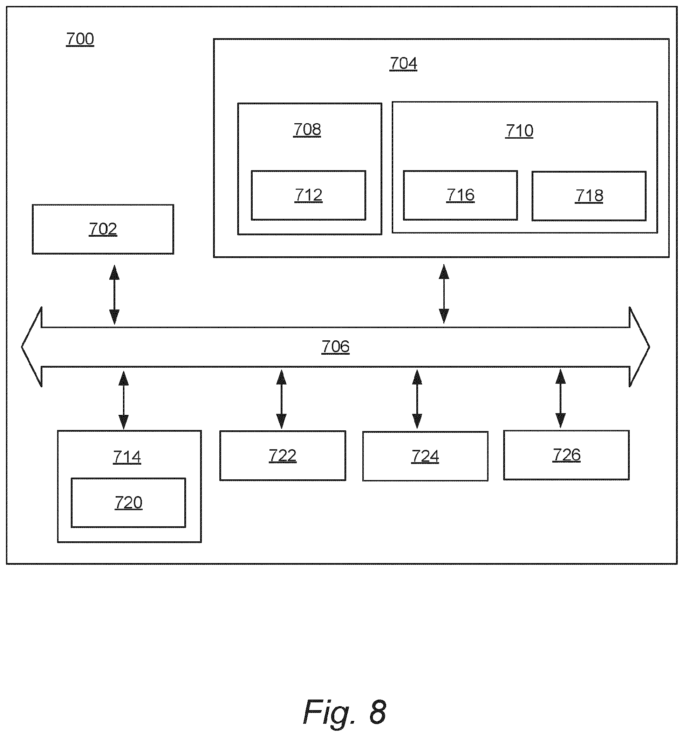

**FIG. 8** is a schematic diagram of a computer system **700** for implementing examples disclosed herein. The computer system **700** is adapted to execute instructions from a computer-readable medium to perform these and/or any of the functions or processing described herein. The computer system 700 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **700** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **700** may comprise at least one computing device or electronic device capable of including firmware, hardware, and/or executing software instructions to implement the functionality described herein. The computer system **700** may include processing circuitry **702**(e.g., processing circuitry including one or more processor devices or control units), a memory **704,** and a system bus **706.** The computer system **700** may include at least one computing device having the processing circuitry **702.** The system bus **706** provides an interface for system components including, but not limited to, the memory **704** and the processing circuitry **702.** The processing circuitry **702** may include any number of hardware components for conducting data or signal processing or for executing computer code stored in memory **704.** The processing circuitry **702** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **702** may further include computer executable code that controls operation of the programmable device.

The system bus **706** may be any of several types of bus structures that may further interconnect to a memory bus (with or without a memory controller), a peripheral bus, and/or a local bus using any of a variety of bus architectures. The memory **704** may be one or more devices for storing data and/or computer code for completing or facilitating methods described herein. The memory **704** may include database components, object code components, script components, or other types of information structure for supporting the various activities herein. Any distributed or local memory device may be utilized with the systems and methods of this description. The memory **704** may be communicably connected to the processing circuitry **702**(e.g., via a circuit or any other wired, wireless, or network connection) and may include computer code for executing one or more processes described herein. The memory **704** may include non-volatile memory **708** (e.g., read-only memory (ROM), erasable programmable read-only memory (EPROM), electrically erasable programmable read-only memory (EEPROM), etc.), and volatile memory **710** (e.g., random-access memory (RAM)), or any other medium which can be used to carry or store desired program code in the form of machine-executable instructions or data structures and which can be accessed by a computer or other machine with processing circuitry **702.** A basic input/output system (BIOS) **712** may be stored in the non-volatile memory **708** and can include the basic routines that help to transfer information between elements within the computer system **700.**

The computer system **700** may further include or be coupled to a non-transitory computer-readable storage medium such as the storage device **714,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **714** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **714** and/or in the volatile memory **710,** which may include an operating system **716** and/or one or more program modules **718.** All or a portion of the examples disclosed herein may be implemented as a computer program **720** stored on a transitory or non-transitory computer-usable or computer-readable storage medium (e.g., single medium or multiple media), such as the storage device **714,** which includes complex programming instructions (e.g., complex computer-readable program code) to cause the processing circuitry **702** to carry out actions described herein. Thus, the computer-readable program code of the computer program **720** can comprise software instructions for implementing the functionality of the examples described herein when executed by the processing circuitry **702.** In some examples, the storage device **714** may be a computer program product (e.g., readable storage medium) storing the computer program **720** thereon, where at least a portion of a computer program **720** may be loadable (e.g., into a processor) for implementing the functionality of the examples described herein when executed by the processing circuitry **702.** The processing circuitry **702** may serve as a controller or control system for the computer system **700** that is to implement the functionality described herein.

The computer system **700** may include an input device interface **722** configured to receive input and selections to be communicated to the computer system **700** when executing instructions, such as from a keyboard, mouse, touch-sensitive surface, etc. Such input devices may be connected to the processing circuitry **702**through the input device interface **722** coupled to the system bus **706** but can be connected through other interfaces, such as a parallel port, an Institute of Electrical and Electronic Engineers (IEEE) 1394 serial port, a Universal Serial Bus (USB) port, an IR interface, and the like. The computer system 700 may include an output device interface **724** configured to forward output, such as to a display, a video display unit (e.g., a liquid crystal display (LCD) or a cathode ray tube (CRT)). The computer system **700** may include a communications interface **726** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1: A computer system 700 comprising processing circuitry 702 being configured to be in a site operating mode 56 for controlling the operation on a site 10; 10a, 10b comprising at least one automated vehicle 30 and a site operator 40, wherein the processing circuitry 702 is configured, in a site operating mode 56, to: receive, from a requester 44, a restriction request 62; set the at least one automated vehicle 30 in the restricted mode 32 based on said restriction request 62, receive, from the requester 44, a resume request 64; in response to the resume request 64 receive, from the site operator 40, a resume instruction 68; and set the at least one automated vehicle 30 in a non-restricted mode 34 at least based on the resume instruction 68.

Example 2: The computer system of example 1, wherein the processing circuitry 702 is further configured to be in a requester operating mode 55, wherein, in the requester operating mode 55, the processing circuitry 702 is configured to: receive, from a requester 44, a restriction request 62, set the at least one automated vehicle 30 in a restricted mode 32 based on said restriction request 62, receive, from the requester 44, a resume request 64; set the at least one automated vehicle 30 in a non-restricted mode 34 at least based on said resume request 64.

Example 3: The computer system of example 1 and 2, wherein the processing circuitry 702 is further configured to: receive an instruction, from the site operator 40, to operate in the requester operating mode 55 or the site operating mode 56.

Example 4: The computer system of any of examples 1 - 3, wherein the requester 44 is an operator of at least one manually controlled vehicle 20 or the site operator 40.

Example 5: The computer system of any of examples 1 - 4, wherein the restriction request comprises position data relating to a geographical area, and wherein the at least one automated vehicle 30 is set in the restricted mode 32 in said geographical area.

Example 6: The computer system of any of examples 1 - 5, wherein the resume request comprises position data relating to a geographical area, and wherein the at least one automated vehicle 30 is set in the non-restricted mode 34 in said geographical area.

Example 7: The computer system of any of examples 1 -6, wherein the site 10 comprises at least one manually controlled vehicle 20, and wherein the processing circuitry 702 is further configured in the site operating mode to: set the at least one manually controlled vehicle 20 in a restricted mode 23 based on said restriction request 62; and set the at least one manually controlled vehicle 20 in a non-restricted mode 24 based on the resume instruction 68.

Example 8: The computer system of any of examples 1 - 7, wherein the processing circuitry 702 is further configured in the site operating mode to: receive, from a first requester 44a a restriction request 62; set the at least one automated vehicle 30 in the restricted mode 32 based on said first restriction request 62, receive, from a second requester 44b a restriction request 62; set the at least one automated vehicle 30 in the restricted mode 32 based on said second restriction request 62, receive, from the first requester 44a, a resume request 64; receive, from the second requester 44b, a resume request 64; in response to the second resume request 64 receive, from the site operator 40, a resume instruction 68; and set the at least one automated vehicle 30 in a non-restricted mode 34 at least based on the second resume instruction 68.

Example 9: The computer system of any of examples 1 - 8, wherein in the restricted mode 22; 32 the operation of the vehicle 20; 30 comprises at least one of reducing the speed of the vehicle 20; 30, activating safety functions of the vehicle 20; 30, stopping the operations of the vehicle 20; 30.

Example 10: The computer system of any of examples 1 - 9, wherein the site 10 comprises a plurality of automated vehicles 30a-d and wherein the processing circuitry 702 is further configured to set all automated vehicles 30a-d within an area of the site 10 in a restricted mode 22, 32 based on the restriction request 62.

Example 11: A site 10 comprising the computer system of any of examples 1-10, wherein the site further comprises at least one automated vehicle 30 and at least one site operator 40.

Example 12: A computer-implemented method for controlling the operation on a site 10 in a site operating mode 56, wherein the site 10 comprises at least one automated vehicle 30 and a site operator 40; wherein the method comprises, for the site operating mode 56: receive 320, by the processing circuitry, a restriction request 62 from a requester 44; set 340, by the processing circuitry, the at least one automated vehicle 30 in the restricted mode 32 based on said restriction request 62, receive 350, by the processing circuitry, a resume request 64 from the requester 44; in response to the resume request 64, receive 360, by the processing circuitry, a resume instruction 68 from a site operator 40, and set 380, by the processing circuitry, the at least one automated vehicle 30 in a non-restricted mode 34 based on the resume instruction 68.

Example 13: The method according to example 12, further comprising, for a requester operating mode 55: receive 220, by the processing circuitry, a restriction request 62 from a requester 44; set 240, by the processing circuitry, the at least one automated vehicle 30 in the restricted mode 32 based on said restriction request 62, receive 250, by the processing circuitry, a resume request 64 from the requester 44; set 280, by the processing circuitry, the at least one automated vehicle 30 in a non-restricted mode 34 based on the resume request 64.

Example 14: A computer program product comprising program code for performing, when executed by the processing circuitry 702, the method of example 12.

Example 15: A non-transitory computer-readable storage medium comprising instructions, which when executed by the processing circuitry 702, cause the processing circuitry to perform the method of example 12.

Example 16: The computer system of any of examples 1 - 10, wherein the site 10 comprises a plurality of automated vehicles 30a-d and a plurality of manually controlled vehicles 20a-c and wherein the processing circuitry 702 is further configured to set all automated vehicles 30a-d and all and all manually controlled vehicles 20a-c within an area of the site 10 in a restricted mode 22, 32 based on the restriction request 62.

Example 17: The computer system of any of examples 1 -10 or 16, wherein the processing circuitry 702 is further configured to: determine that the computer system is to operate in the requester operating mode 55 or the site operating mode 56.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

## Claims

1. A computer system (700) comprising processing circuitry (702) being configured to be in a site operating mode (56) for controlling the operation on a site (10; 10a, 10b) comprising at least one automated vehicle (30) and a site operator (40),
wherein the processing circuitry (702) is configured, in a site operating mode (56), to:
receive, from a requester (44), a restriction request (62);
set the at least one automated vehicle (30) in the restricted mode (32) based on said restriction request (62),
receive, from the requester (44), a resume request (64);
in response to the resume request (64) receive, from the site operator (40), a resume instruction (68); and
set the at least one automated vehicle (30) in a non-restricted mode (34) at least based on the resume instruction (68).

2. The computer system of claim 1, wherein the processing circuitry (702) is further configured to be in a requester operating mode (55), wherein, in the requester operating mode (55), the processing circuitry (702) is configured to:
receive, from a requester (44), a restriction request (62),
set the at least one automated vehicle (30) in a restricted mode (32) based on said restriction request (62),
receive, from the requester (44), a resume request (64);
set the at least one automated vehicle (30) in a non-restricted mode (34) at least based on said resume request (64).

3. The computer system of claim 1 and 2, wherein the processing circuitry (702) is further configured to:
receive an instruction, from the site operator (40), to operate in the requester operating mode (55) or the site operating mode (56).

4. The computer system of any of claims 1 - 3, wherein the requester (44) is an operator of at least one manually controlled vehicle (20) or the site operator (40).

5. The computer system of any of claims 1 - 4, wherein the restriction request comprises position data relating to a geographical area, and wherein the at least one automated vehicle (30) is set in the restricted mode (32) in said geographical area.

6. The computer system of any of claims 1 - 5, wherein the resume request comprises position data relating to a geographical area, and wherein the at least one automated vehicle (30) is set in the non-restricted mode (34) in said geographical area.

7. The computer system of any of claims 1 -6, wherein the site (10) comprises at least one manually controlled vehicle (20), and wherein the processing circuitry (702) is further configured in the site operating mode to:
set the at least one manually controlled vehicle (20) in a restricted mode (23) based on said restriction request (62); and
set the at least one manually controlled vehicle (20) in a non-restricted mode (24) based on the resume instruction (68).

8. The computer system of any of claims 1 - 7, wherein the processing circuitry (702) is further configured in the site operating mode to:
receive, from a first requester (44a), a first restriction request (62);
set the at least one automated vehicle (30) in the restricted mode (32) based on said first restriction request (62),
receive, from a second requester (44b), a second restriction request (62);
set the at least one automated vehicle (30) in the restricted mode (32) based on said second restriction request (62),
receive, from the first requester (44a), a first resume request (64);
receive, from the second requester (44b), a second resume request (64);
in response to the second resume request (64) receive, from the site operator (40), a resume instruction (68); and
set the at least one automated vehicle (30) in a non-restricted mode (34) at least based on the second resume instruction (68).

9. The computer system of any of claims 1 - 8, wherein in the restricted mode (22; 32) the operation of the vehicle (20; 30) comprises at least one of reducing the speed of the vehicle (20; 30), activating safety functions of the vehicle (20; 30), stopping the operations of the vehicle (20; 30).

10. The computer system of any of claims 1 - 9, wherein the site (10) comprises a plurality of automated vehicles (30a-d) and wherein the processing circuitry (702) is further configured to set all automated vehicles (30a-d) within an area of the site (10) in a restricted mode (22, 32) based on the restriction request (62).

11. A site (10) comprising the computer system of any of claims 1-10, wherein the site further comprises at least one automated vehicle (30) and at least one site operator (40).

12. A computer-implemented method for controlling the operation on a site (10) in a site operating mode (56), wherein the site (10) comprises at least one automated vehicle (30) and a site operator (40);
wherein the method comprises, for the site operating mode (56):
receive (320), by the processing circuitry, a restriction request (62) from a requester (44);
set (340), by the processing circuitry, the at least one automated vehicle (30) in the restricted mode (32) based on said restriction request (62),
receive (350), by the processing circuitry, a resume request (64) from the requester (44);
in response to the resume request (64), receive (360), by the processing circuitry, a resume instruction (68) from a site operator (40), and
set (380), by the processing circuitry, the at least one automated vehicle (30) in a non-restricted mode (34) based on the resume instruction (68).

13. The method according to claim 12, further comprising, for a requester operating mode (55):
receive (220), by the processing circuitry, a restriction request (62) from a requester (44);
set (240), by the processing circuitry, the at least one automated vehicle (30) in the restricted mode (32) based on said restriction request (62),
receive (250), by the processing circuitry, a resume request (64) from the requester (44);
set (280), by the processing circuitry, the at least one automated vehicle (30) in a non-restricted mode (34) based on the resume request (64).

14. A computer program product comprising program code for performing, when executed by the processing circuitry (702), the method of claim 12.

15. A non-transitory computer-readable storage medium comprising instructions, which when executed by the processing circuitry (702), cause the processing circuitry to perform the method of claim 12.

## Patentansprüche

1. Ein Computersystem (700), das eine Verarbeitungseinheit (702) umfasst, die so konfiguriert ist, dass sie sich in einem Betriebsmodus für eine Anlage (56) befindet, um den Betrieb einer Anlage (10; 10a, 10b) zu steuern, die mindestens ein automatisiertes Fahrzeug (30) und einen Anlagenbetreiber (40) umfasst,
wobei die Verarbeitungseinheit (702) so konfiguriert ist, dass sie sich, in einem Betriebsmodus für eine Anlage (56), eine Einschränkungsanfrage (62) von einem Anfordernden (44) entgegennimmt;
das mindestens eine automatisierte Fahrzeug (30) in einen eingeschränkten Modus (32) versetzt, basierend auf der Einschränkungsanfrage (62);
eine Wiederaufnahmeanfrage (64) vom Anfordernden (44) entgegennimmt;
als Reaktion auf die Wiederaufnahmeanfrage (64) eine Wiederaufnahmeanweisung (68) vom Anlagenbetreiber (40) entgegennimmt; und
das mindestens eine automatisierte Fahrzeug (30) in einen nicht eingeschränkten Modus (34) versetzt, basierend auf der Wiederaufnahmeanweisung (68).

2. Das Computersystem gemäß Anspruch 1, wobei die Verarbeitungseinheit (702) ferner so konfiguriert ist, dass sie sich in einem Betriebsmodus für einen Anfordernden (55) befindet, wobei die Verarbeitungseinheit (702), in dem Betriebsmodus für einen Anfordernden (55), so konfiguriert ist,
dass sie eine Einschränkungsanfrage (62) von einem Anfordernden (44) entgegennimmt,
das mindestens eine automatisierte Fahrzeug (30) in einen eingeschränkten Modus (32) versetzt, basierend auf der Einschränkungsanfrage (62), eine Wiederaufnahmeanfrage (64) vom Anfordernden (44) entgegennimmt;
das mindestens eine automatisierte Fahrzeug (30) in einen nicht eingeschränkten Modus (34) versetzt, basierend auf der Wiederaufnahmeanfrage (64).

3. Das Computersystem gemäß den Ansprüchen 1 und 2, wobei die Verarbeitungseinheit (702) ferner so konfiguriert ist,
dass sie eine Anweisung vom Anlagenbetreiber (40) empfängt, um in den Betriebsmodus für einen Anfordernden (55) oder den Betriebsmodus für eine Anlage (56) zu arbeiten.

4. Das Computersystem gemäß einem der Ansprüche 1 - 3, wobei der Anfordernde (44) ein Operator von mindestens einem manuell gesteuerten Fahrzeug (20) oder der Anlagenbetreiber (40) ist.

5. Das Computersystem gemäß einem der Ansprüche 1 - 4, wobei die Einschränkungsanfrage Positionsdaten in Bezug auf einen geografischen Bereich umfasst und wobei das mindestens eine automatisierte Fahrzeug (30) in den eingeschränkten Modus (32) in diesem geografischen Bereich versetzt wird.

6. Das Computersystem gemäß einem der Ansprüche 1 - 5, wobei die Wiederaufnahmeanfrage Positionsdaten in Bezug auf einen geografischen Bereich umfasst und wobei das mindestens eine automatisierte Fahrzeug (30) in den nicht eingeschränkten Modus (34) in diesem geografischen Bereich versetzt wird.

7. Das Computersystem gemäß einem der Ansprüche 1 - 6, wobei die Anlage (10) mindestens ein manuell gesteuertes Fahrzeug (20) umfasst und wobei die Verarbeitungseinheit (702) ferner so konfiguriert ist, dass sie, in dem Betriebsmodus für eine Anlage, Folgendes tut:
das mindestens eine manuell gesteuerte Fahrzeug (20) in einen eingeschränkten Modus (23) versetzt, basierend auf der Einschränkungsanfrage (62); und
das mindestens eine manuell gesteuerte Fahrzeug (20) in einen nicht eingeschränkten Modus (24) versetzt, basierend auf der Wiederaufnahmeanweisung (68).

8. Das Computersystem gemäß einem der Ansprüche 1 - 7, wobei die Verarbeitungseinheit (702) ferner so konfiguriert ist, dass sie, in dem Betriebsmodus für eine Anlage, Folgendes tut:
eine erste Einschränkungsanfrage (62) von einem ersten Anfordernden (44a) entgegennimmt;
das mindestens eine automatisierte Fahrzeug (30) in den eingeschränkten Modus (32) versetzt, basierend auf der ersten Einschränkungsanfrage (62);
eine zweite Einschränkungsanfrage (62) von einem zweiten Anfordernden (44b) entgegennimmt;
das mindestens eine automatisierte Fahrzeug (30) in den eingeschränkten Modus (32) versetzt, basierend auf der zweiten Einschränkungsanfrage (62);
eine erste Wiederaufnahmeanfrage (64) vom ersten Anfordernden (44a) entgegennimmt;
eine zweite Wiederaufnahmeanfrage (64) vom zweiten Anfordernden (44b) entgegennimmt;
als Reaktion auf die zweite Wiederaufnahmeanfrage (64) eine Wiederaufnahmeanweisung (68) vom Anlagenbetreiber (40) entgegennimmt; und
das mindestens eine automatisierte Fahrzeug (30) in einen nicht eingeschränkten Modus (34) versetzt, basierend auf der zweiten Wiederaufnahmeanweisung (68).

9. Das Computersystem gemäß einem der Ansprüche 1 - 8, wobei, in dem eingeschränkten Modus (22; 32), der Betrieb des Fahrzeugs (20; 30) mindestens eine der folgenden Operationen umfasst: Reduzierung der Geschwindigkeit des Fahrzeugs (20; 30), Aktivierung von Sicherheitsfunktionen des Fahrzeugs (20; 30), Stoppen der Operationen des Fahrzeugs (20; 30).

10. Das Computersystem gemäß einem der Ansprüche 1 - 9, wobei die Anlage (10) eine Vielzahl von automatisierten Fahrzeugen (30a-d) umfasst und wobei die Verarbeitungseinheit (702) ferner so konfiguriert ist, dass sie alle automatisierten Fahrzeuge (30a-d) innerhalb eines Bereichs der Anlage (10) in einen eingeschränkten Modus (22, 32) versetzt, basierend auf der Einschränkungsanfrage (62).

11. Eine Anlage (10), die das Computersystem gemäß einem der Ansprüche 1-10 umfasst, wobei die Anlage ferner mindestens ein automatisiertes Fahrzeug (30) und mindestens einen Anlagenbetreiber (40) umfasst.

12. Ein computerimplementiertes Verfahren zur Steuerung des Betriebs einer Anlage (10) in einem Betriebsmodus für eine Anlage (56), wobei die Anlage (10) mindestens ein automatisiertes Fahrzeug (30) und einen Anlagenbetreiber (40) umfasst;
wobei das Verfahren, für den Betriebsmodus für eine Anlage (56), Folgendes umfasst:
Entgegennehmen (320), durch die Verarbeitungseinheit, einer Einschränkungsanfrage (62) von einem Anfordernden (44);
Versetzen (340), durch die Verarbeitungseinheit, des mindestens einen automatisierten Fahrzeugs (30) in den eingeschränkten Modus (32), basierend auf der Einschränkungsanfrage (62);
Entgegennehmen (350), durch die Verarbeitungseinheit, einer Wiederaufnahmeanfrage (64) vom Anfordernden (44);
Als Reaktion auf die Wiederaufnahmeanfrage (64), Entgegennehmen (360), durch die Verarbeitungseinheit, einer Wiederaufnahmeanweisung (68) von einem Anlagenbetreiber (40); und
Versetzen (380), durch die Verarbeitungseinheit, des mindestens einen automatisierten Fahrzeugs (30) in einen nicht eingeschränkten Modus (34), basierend auf der Wiederaufnahmeanweisung (68).

13. Das Verfahren gemäß Anspruch 12, das ferner, für einen Betriebsmodus für einen Anfordernden (55), Folgendes umfasst:
Entgegennehmen (220), durch die Verarbeitungseinheit, einer Einschränkungsanfrage (62) von einem Anfordernden (44);
Versetzen (240), durch die Verarbeitungseinheit, des mindestens einen automatisierten Fahrzeugs (30) in den eingeschränkten Modus (32), basierend auf der Einschränkungsanfrage (62);
Entgegennehmen (250), durch die Verarbeitungseinheit, einer Wiederaufnahmeanfrage (64) vom Anfordernden (44);
Versetzen (280), durch die Verarbeitungseinheit, des mindestens einen automatisierten Fahrzeugs (30) in einen nicht eingeschränkten Modus (34), basierend auf der Wiederaufnahmeanfrage (64).

14. Ein computerimplementiertes Produkt, das Programmcode umfasst, um, wenn es von der Verarbeitungseinheit (702) ausgeführt wird, das Verfahren gemäß Anspruch 12 auszuführen.

15. Ein nicht-flüchtiges, computerlesbares Speichermedium, das Anweisungen umfasst, die, wenn sie von der Verarbeitungseinheit (702) ausgeführt werden, die Verarbeitungseinheit veranlassen, das Verfahren gemäß Anspruch 12 auszuführen.

## Revendications

1. Un système informatique (700) comprenant une circuiterie de traitement (702) étant configurée pour être dans un mode de fonctionnement de site (56) pour commander le fonctionnement sur un site (10 ; 10a, 10b) comprenant au moins un véhicule automatisé (30) et un opérateur de site (40),
dans lequel la circuiterie de traitement (702) est configurée, dans un mode de fonctionnement de site (56), pour recevoir, de la part d'un demandeur (44), une demande de restriction (62) ;
placer l'au moins un véhicule automatisé (30) dans le mode restreint (32) sur la base de ladite demande de restriction (62),
recevoir, de la part du demandeur (44), une demande de reprise (64) ; en réponse à la demande de reprise (64) recevoir, de la part de l'opérateur de site (40), une instruction de reprise (68) ; et placer l'au moins un véhicule automatisé (30) dans un mode non restreint (34) au moins sur la base de l'instruction de reprise (68).

2. Le système informatique selon la revendication 1, dans lequel la circuiterie de traitement (702) est en outre configurée pour être dans un mode de fonctionnement de demandeur (55), dans lequel, dans le mode de fonctionnement de demandeur (55), la circuiterie de traitement (702) est configurée pour :
recevoir, de la part du demandeur (44), une demande de restriction (62),
placer l'au moins un véhicule automatisé (30) dans un mode restreint (32) sur la base de ladite demande de restriction (62),
recevoir, de la part du demandeur (44), une demande de reprise (64) ;
placer l'au moins un véhicule automatisé (30) dans un mode non restreint (34) au moins sur la base de ladite demande de reprise (64).

3. Le système informatique selon les revendications 1 et 2, dans lequel la circuiterie de traitement (702) est en outre configurée pour :
recevoir une instruction, de la part de l'opérateur de site (40), pour fonctionner dans le mode de fonctionnement de demandeur (55) ou le mode de fonctionnement de site (56).

4. Le système informatique selon l'une quelconque des revendications 1 - 3, dans lequel le demandeur (44) est un opérateur d'au moins un véhicule commandé manuellement (20) ou l'opérateur de site (40).

5. Le système informatique selon l'une quelconque des revendications 1 - 4, dans lequel la demande de restriction comprend des données de position relatives à une zone géographique, et dans lequel l'au moins un véhicule automatisé (30) est placé dans le mode restreint (32) dans ladite zone géographique.

6. Le système informatique selon l'une quelconque des revendications 1 - 5, dans lequel la demande de reprise comprend des données de position relatives à une zone géographique, et dans lequel l'au moins un véhicule automatisé (30) est placé dans le mode non restreint (34) dans ladite zone géographique.

7. Le système informatique selon l'une quelconque des revendications 1 - 6, dans lequel le site (10) comprend au moins un véhicule commandé manuellement (20), et dans lequel la circuiterie de traitement (702) est en outre configurée dans le mode de fonctionnement de site pour :
placer l'au moins un véhicule commandé manuellement (20) dans un mode restreint (23) sur la base de ladite demande de restriction (62) ; et
placer l'au moins un véhicule commandé manuellement (20) dans un mode non restreint (24) sur la base de l'instruction de reprise (68).

8. Le système informatique selon l'une quelconque des revendications 1 - 7, dans lequel la circuiterie de traitement (702) est en outre configurée dans le mode de fonctionnement de site pour :
recevoir, de la part d'un premier demandeur (44a), une première demande de restriction (62) ;
placer l'au moins un véhicule automatisé (30) dans le mode restreint (32) sur la base de ladite première demande de restriction (62),
recevoir, de la part d'un deuxième demandeur (44b), une deuxième demande de restriction (62) ;
placer l'au moins un véhicule automatisé (30) dans le mode restreint (32) sur la base de ladite deuxième demande de restriction (62),
recevoir, de la part du premier demandeur (44a), une première demande de reprise (64) ;
recevoir, de la part du deuxième demandeur (44b), une deuxième demande de reprise (64) ;
en réponse à la deuxième demande de reprise (64) recevoir, de la part de l'opérateur de site (40), une instruction de reprise (68) ; et
placer l'au moins un véhicule automatisé (30) dans un mode non restreint (34) au moins sur la base de la deuxième instruction de reprise (68).

9. Le système informatique selon l'une quelconque des revendications 1 - 8, dans lequel dans le mode restreint (22 ; 32) le fonctionnement du véhicule (20 ; 30) comprend au moins l'un parmi la réduction de la vitesse du véhicule (20 ; 30), l'activation de fonctions de sécurité du véhicule (20 ; 30), l'arrêt des opérations du véhicule (20 ; 30).

10. Le système informatique selon l'une quelconque des revendications 1 - 9, dans lequel le site (10) comprend une pluralité de véhicules automatisés (30a-d) et dans lequel la circuiterie de traitement (702) est en outre configurée pour placer tous les véhicules automatisés (30a-d) à l'intérieur d'une zone du site (10) dans un mode restreint (22, 32) sur la base de la demande de restriction (62).

11. Un site (10) comprenant le système informatique selon l'une quelconque des revendications 1-10, dans lequel le site comprend en outre au moins un véhicule automatisé (30) et au moins un opérateur de site (40).

12. Un procédé mis en œuvre par ordinateur pour commander le fonctionnement sur un site (10) dans un mode de fonctionnement de site (56), dans lequel le site (10) comprend au moins un véhicule automatisé (30) et un opérateur de site (40) ;
dans lequel le procédé comprend, pour le mode de fonctionnement de site (56) :
recevoir (320), par la circuiterie de traitement, une demande de restriction (62) provenant d'un demandeur (44) ;
placer (340), par la circuiterie de traitement, l'au moins un véhicule automatisé (30) dans le mode restreint (32) sur la base de ladite demande de restriction (62),
recevoir (350), par la circuiterie de traitement, une demande de reprise (64) provenant du demandeur (44) ;
en réponse à la demande de reprise (64), recevoir (360), par la circuiterie de traitement, une instruction de reprise (68) provenant d'un opérateur de site (40), et
placer (380), par la circuiterie de traitement, l'au moins un véhicule automatisé (30) dans un mode non restreint (34) sur la base de l'instruction de reprise (68).

13. Le procédé selon la revendication 12, comprenant en outre, pour un mode de fonctionnement de demandeur (55) :
recevoir (220), par la circuiterie de traitement, une demande de restriction (62) provenant d'un demandeur (44) ;
placer (240), par la circuiterie de traitement, l'au moins un véhicule automatisé (30) dans le mode restreint (32) sur la base de ladite demande de restriction (62),
recevoir (250), par la circuiterie de traitement, une demande de reprise (64) provenant du demandeur (44) ;
placer (280), par la circuiterie de traitement, l'au moins un véhicule automatisé (30) dans un mode non restreint (34) sur la base de la demande de reprise (64).

14. Un produit programme informatique comprenant un code de programme pour exécuter, lorsqu'il est exécuté par la circuiterie de traitement (702), le procédé selon la revendication 12.

15. Un support de stockage lisible par ordinateur non transitoire comprenant des instructions, qui lorsqu'elles sont exécutées par la circuiterie de traitement (702), amènent la circuiterie de traitement à exécuter le procédé selon la revendication 12.
